# EUROPÄISCHE PATENTSCHRIFT

(11) **EP 1 084 921 B1**
(45) Veröffentlichungstag und Bekanntmachung des Hinweises auf die Patenterteilung: **29.03.2006**
(21) Anmeldenummer: 00119028.9
(22) Anmeldetag: 01.09.2000
(51) Int. Cl.: B60S 1/54, B60S 1/56, B60R 1/06

(54) **Verfahren zur Reinigung eines Aussenrückspiegels an Kraftfahrzeugen**
Method for cleaning an exterior rear-view mirror of vehicles
Procédé de nettoyage d'un rétroviseur extérieur de véhicules

(30) Priorität: 20.09.1999 AT 159799
(43) Veröffentlichungstag der Anmeldung: 21.03.2001
(73) Patentinhaber: MAN Nutzfahrzeuge Österreich AG, 1230 Wien (AT)
(72) Erfinder: Böck, Kurt, 3722 Straning (AT); Ribo,Franz, 1226 Wien (AT); Fux, Eduard, 2230 Gänserndorf (AT)

(56) Entgegenhaltungen:
- DE-A- 4 213 506
- US-A- 2 622 261
- US-A- 4 611 761
- PATENT ABSTRACTS OF JAPAN vol. 1997, no. 10, 31. Oktober 1997 (1997-10-31) -& JP 09 150715 A (MIZUGUCHI MASAYOSHI), 10. Juni 1997 (1997-06-10)
- PATENT ABSTRACTS OF JAPAN vol. 1999, no. 08, 30. Juni 1999 (1999-06-30) -& JP 11 078796 A (HONDA MOTOR CO LTD), 23. März 1999 (1999-03-23)

## Beschreibung

Die Erfindung betrifft ein Verfahren zur Reinigung eines Außenrückspiegels an Kraftfahrzeugen, insbesondere Nutzfahrzeugen wie Lastkraftwagen und Omnibussen, mit gattungsgemäßen Merkmalen wie im Oberbegriff des Anspruchs 1 angegeben.

Ein Verfahren zur Reinigung eines Außenspiegels an Kraftfahrzeugen mit den gattungsgemäßen Merkmalen entsprechend dem Oberbegriff des Anspruchs 1 ist aus der US 4,611,761 A bekannt.

Ein dem vorgenannten ähnliches Spiegel-Reinigungsverfahren ist außerdem aus der US 2,622,261 A bekannt. Über die gattungsgemäßen Merkmale hinaus ist es hieraus auch bekannt, dass die Ausbringung der Reinigungsflüssigkeit und die Ausbringung der Druckluft an die Spiegelfläche unabhängig voneinander durch eine zeitlich versetzte Betätigung mehrerer im Bereich des Fahrerarbeitsplatzes, z. B. am Armaturenbrett angeordneter Schalter initiiert wird und hinsichtlich ihrer Dauer manuell festgelegt wird.

In beiden bekannten Fällen werden mithin die Reinigungsvorgänge rein manuell vom Fahrer gesteuert. Dies kann sich insofern als nachteilig auswirken, weil dann, wenn der Fahrer vergisst, die eine oder andere Reinigung - mit Flüssigkeit oder mit Druckluft - abzuschalten, der Reinigungsmittelvorrat sehr schnell aufgebraucht ist und dann für später notwendige Spiegelreinigungen nicht mehr zur Verfügung steht.

Es ist daher Aufgabe der Erfindung, ein Verfahren zur Reinigung eines Kraftfahrzeug-Außenrückspiegels zu schaffen, das mit einfachen Mitteln darstellbar ist und eine bedarfsweise Reinigung der Spiegelfläche mit bestmöglichem Reinigungseffekt, aber trotzdem sparsamen Umgang mit den verfügbaren Reinigungsmitteln ermöglicht.

Diese Aufgabe ist erfindungsgemäß durch die im Kennzeichen des Anspruchs 1 angegebenen Verfahrensabläufe gelöst.

Die erfindungsgemäße Lösung ermöglicht es, auch fest an der Spiegelfläche anhaftenden Schmutz durch Auftragung von Reinigungsflüssigkeit zu lösen. Die Art und Zusammensetzung der Reinigungsflüssigkeit bestimmen den Grad und die Dauer der Schmutzlösung. Für die Entfernung der Reinigungsflüssigkeit und des gelösten Schmutzes sorgt die erfindungsgemäße Zufuhr von Druckluft, wobei die Geschwindigkeitskomponente der Druckluft sowohl für ein vollständiges Wegblasen der oberflächigen Verunreinigungen und der Reinigungsflüssigkeit als auch ein Trocknen der Spiegelfläche maßgeblich ist. Nach einem solchen Reinigungsvorgang ist die Spiegelfläche frei von Verunreinigungen und der Fahrer hat über den Außenrückspiegel wieder freie Sicht. Dadurch, dass die Ausbringung der Reinigungsmittel zeitmäßig vorgegeben bzw. begrenzt wird, ist einem unnötig hohen Reinigungsmittelverbrauch wirksam vorgebeugt.

Vorteilhafte Details des erfindungsgemäßen Verfahrens sind in den Unteransprüchen gekennzeichnet. Da alle deren Merkmale durch die Figurenbeschreibung gestützt sind, wird zur Vermeidung von Wiederholungen auf diese verwiesen und an dieser Stelle auf die Zitierung der Unteransprüche verzichtet.

Nachfolgend ist das erfindungsgemäße Verfahren anhand der Zeichnung näher erläutert. Fig. 1 zeigt dabei im Rahmen einer Prinzipskizze ein Beispiel für eine Vorrichtung zur Durchführung des erfindungsgemäßen Verfahrens, Fig. 2 und Fig. 3 zeigen jeweils eine Schalter- bzw. Schaltungsanordnung, mit der Spiegelreinigungsvorgänge vom Fahrer initiierbar sind.

Mit 1 ist ein Außenrückspiegel eines Kraftfahrzeuges bezeichnet, bei dem es sich insbesondere um ein Nutzfahrzeug wie Lastkraftwagen und Omnibus handelt. Bei diesen großen Fahrzeugen besteht für den Fahrer in der Regel wegen des großen Abstandes zum Fahrerplatz keine Möglichkeit, einen der entfernt angeordneten Außenrückspiegel manuell zu reinigen.

Mit 2 ist eine Düse bezeichnet, die am Randbereich des Spiegelgehäuses 3 angeordnet ist. Vorzugsweise sind jedoch mehrere solcher Düsen 2 verteilt an einem Randbereich des Spiegelgehäuses 3 vorgesehen. Die Düse 2 bzw. jede der Düsen 2 ist so ausgerichtet, dass die durch sie auszubringende Reinigungsflüssigkeit bzw. Druckluft randseitig an der Spiegelfläche 4 auftrifft und dann sich auf dieser zur gegenüberliegenden Randseite hin verteilt bzw. abfließt.

Die Reinigungsflüssigkeit für eine Reinigung des Außenrückspiegels 1 wird gesteuert aus einer Leitung 5 abgezweigt, die Teil einer fahrzeugintem vorhandenen Windschutzscheiben- und/oder Scheinwerferreinigungsvorrichtung ist. Diese weist einen Reinigungsflüssigkeitsvorratsbehälter 6 mit zugeordneter Pumpe 7 auf, an deren Förderausgang die zu windschutzscheiben- und/oder scheinwerfer-seitigen Düsen 8 hinführende Leitung 5 abgeht. Die Abzweigung der für einen Spiegelreinigungsvorgang notwendigen Reinigungsflüssigkeit erfolgt beispielsweise durch eine elektrisch bzw. elektronisch gesteuerte Umschaltung eines Mehrwegeventiles 9, das in die Leitung 5 eingebaut ist, an dessen einem Eingang die Leitung 5 angeschlossen ist, an dessen ersten Ausgang die Leitung 5 weiterführt und an dessen zweiten Ausgang eine Speiseleitung 10, 10' abgeht, die zu der/den Düse(n) 2 hinführt.

Die Bereitstellung von Druckluft für eine Reinigung des Außenrückspiegels 1 erfolgt durch Freischaltung einer Speiseleitung 11 mittels eines elektrisch bzw. elektronisch gesteuerten Absperrventils 12, welche Speiseleitung 11 von einem Druckluftbehälter 13 abzweigt, der Teil der fahrzeuginternen Druckluftanlage ist, zur Druckluftversorgung anderer Verbraucher wie Bremsen, Türöffnungs- und Schließmechanismen etc. dient und von einem Kompressor her über Leitung 14 geladen wird.

Es besteht grundsätzlich die Möglichkeit, die für die Reinigung des Außenrückspiegels 1 erforderliche Reinigungsflüssigkeit und Druckluft entweder
a) nacheinander über die selbe(n) Düse(n) 2, oder
b) getrennt voneinander über jeweils wenigstens eine eigene Düse 2
auf die Spiegelfläche 4 auszubringen. Im Fall a) mündet die druckluft-führende Leitung 11, in die dann ein nur in Speiserichtung durchlässiges Rückschlagventil 15 eingebaut ist, in die normalerweise Reinigungsflüssigkeit führende Speiseleitung 10, wobei in deren zwischen Mehrwegventil 9 und Einmündungsstelle 16 gegebenem Abschnitt 10' ein nur in Reinigungsflüssigkeits-Speiserichtung durchlässiges Rückschlagventil 17 eingebaut ist. Im Fall b) wären die Rückschlagventile 16 und 17 nicht notwendig, weil die druckluft-führende Speiseleitung 11 dann parallel zur Speiseleitung 10 verlaufen und nur zu der/den druckluftausbringenden Düse(n) 2 hinführen würde.

Die Initiierung eines Reinigungsvorganges für den Außenrückspiegel 1 erfolgt durch den Fahrer durch Betätigung wenigstens eines im Bereich des Fahrerplatzes z. B. am Armaturenbrett, am Lenkrad, einem Multifunktionsschalthebel etc. angeordneten Schalters.

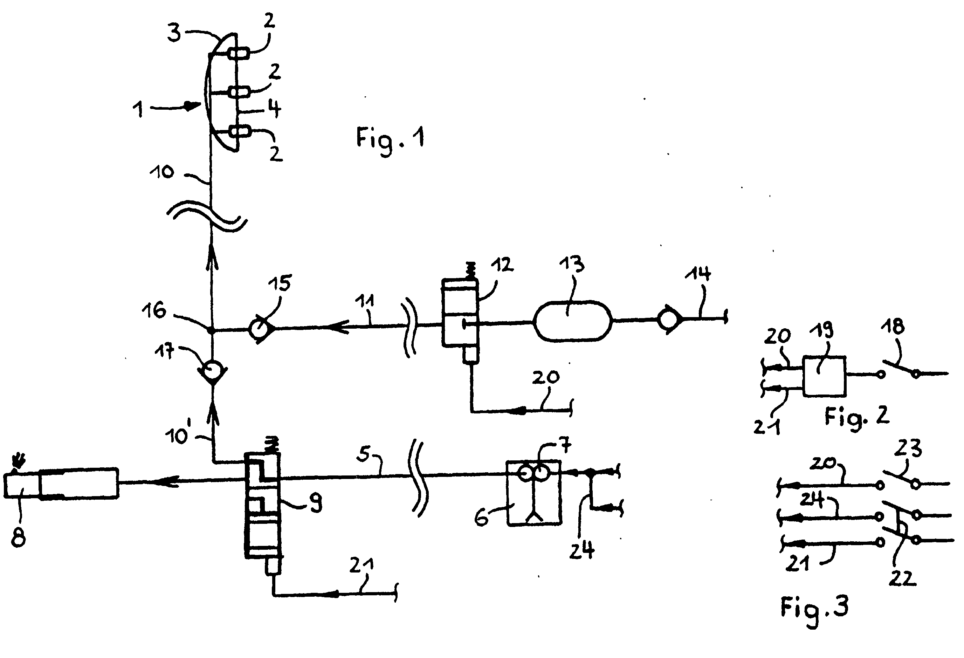

Im Fall gemäß Fig. 2 ist ein einziger Schalter 18 vorgesehen, dem eine elektrische bzw. elektronische Steuereinrichtung 19 nachgeordnet ist. An dieser Steuereinrichtung 19 sind eine Steuerleitung 20, über die entsprechende Befehle für Schaltung des Absperrventiles 12 leitbar sind, und eine Steuerleitung 21, über die das Mehrwegeventil 9 seine Umschaltbefehle erhält, angeschlossen. Mit dieser Steuereinrichtung 19 wird eine Ausbringung der Reinigungsflüssigkeit und der Druckluft für einen Reinigungsvorgang des Außenrückspiegels 1 von ihrem zeitlichen Ablauf her durch entsprechende interne Vorgaben gesteuert. Dabei kann diese zeitliche Abfolge so vorgegeben sein, dass nach Ausbringung der vorgegebenen Reinigungsflüssigkeitsmenge eine im Hinblick auf die Lösungswirkung der Reinigungsflüssigkeit abgestimmte Einwirkdauer verbleibt, ehe dann die Druckluft zur Abblasung der Reinigungsflüssigkeit mit dem gelösten Schmutz aktiviert wird.

Im Fall gemäß Fig. 3 sind zwei Schalter 22, 23 vorgesehen, die unabhängig voneinander vom Fahrer betätigbar sind. Durch Betätigung des Schalters 22 wird über Steuerleitung 21 die Umschaltung des Mehrwegeventils 9 auf Durchlass für Reinigungsflüssigkeit in die Speiseleitung 10 sowie über Steuerleitung 24 die Aktivierung der Pumpe 7 veranlasst, so dass Reinigungsflüssigkeit zum Außenrückspiegel 4 gelangt und über die Düse(n) 2 auf die Spiegelfläche 4 ausgebracht wird. Wenn der Fahrer dann anschließend bzw. nach einer gewissen Reinigungsflüssigkeitseinwirkzeit den Schalter 23 betätigt, wird durch Befehl über Steuerleitung 20 das Absperrventil 22 im Sinne einer Freischaltung der Speiseleitung 11 betätigt, worauf dann Druckluft zum Außenrückspiegel 1 gelangt und über die Düse(n) 2 ausgebracht wird, so dass dann die Reinigungsflüssigkeit mit dem gelösten Schmutz von der Spiegelfläche 4 weggeblasen wird. Bei Betätigung jedes der beiden Schalter 22, 23 wird ein elektrisches bzw. elektronisches Zeitglied aktiviert, das jeweils eine bestimmte Dauer für den jeweiligen Vorgang vorgibt bzw. letzteren hinsichtlich seiner Dauer begrenzt.

## Patentansprüche

1. Verfahren zur Reinigung eines Außenrückspiegels (1) an Kraftfahrzeugen, insbesondere Nutzfahrzeugen wie Lastkraftwagen und Omnibussen, bei dem nach Initiierung eines Reinigungsvorganges durch den Fahrer zunächst über wenigstens eine Düse (2) am Außenrückspiegel (1) Reinigungsflüssigkeit auf die Spiegelfläche (4) aufgesprüht und anschließend bzw. später die Spiegelfläche (4) mittels ihr zugeführter Druckluft, durch die die Reinigungsflüssigkeit und Schmutzpartikel weggeblasen werden, gesäubert wird, wobei die Reinigungsflüssigkeit für die Spiegelreinigung gesteuert aus einer Leitung (5) abgezweigt wird, die Teil einer fahrzeugintem vorhandenen Windschutzscheiben- und/oder Scheinwerferreinigungsvorrichtung ist, und die Druckluft für die Spiegelreinigung gesteuert aus einem Druckluftbehälter (13) bereitgestellt wird, der Teil der fahrzeugintemen Druckluftanlage ist, **dadurch gekennzeichnet, dass** entweder
a) die Initiierung eines Spiegelreinigungsvorgangs durch Betätigung eines im Bereich des Fahrerplatzes entweder am Armaturenbrett oder am Lenkrad oder einem Multifunktionshebel angeordneten Schalters (18) durch den Fahrer erfolgt und die zeitliche Abfolge der Ausbringung der Reinigungsflüssigkeit sowie der Druckluft durch eine elektronische Steuereinrichtung gesteuert erfolgt, wobei nach Ausbringung der Reinigungsflüssigkeit für diese eine bestimmte Einwirkdauer vorgegeben ist, ehe dann die Druckluft zur Abblasung aktiviert wird, oder
b) die Ausbringung von Reinigungsflüssigkeit und die Ausbringung von Druckluft an die Spiegelfläche (4) unabhängig voneinander durch zeitlich versetzt erfolgende Betätigung zweier im Bereich des Fahrerplatzes entweder am Armaturenbrett oder am Lenkrad oder einem oder mehreren Multifunktionsschalthebeln angeordneter Schalter (22, 23) initiiert wird und hinsichtlich ihrer Dauer durch ein aktiviertes Zeitglied vorgegeben ist.

2. Verfahren nach Anspruch 1, **dadurch gekennzeichnet, dass** die Abzweigung der Reinigungsflüssigkeit für eine Spiegelreinigung durch eine elektrisch oder elektronisch gesteuerte Umschaltung eines Mehrwegeventils (9) erfolgt, das in eine von einer entweder am oder in einem Reinigungsflüssigkeitsvorratsbehälter (6) angeordneten Reinigungsmittelpumpe (7) abgehenden und zu scheinwerfer- und/oder windschutzscheibenseitigen Düsen (8) führende Versorgungsleitung (5) eingebaut und an dessen zweitem Ausgang eine mit einer oder mehreren rückspiegelseitigen Düsen (2) verbundene Speiseleitung (10) angeschlossen ist.

3. Verfahren nach Anspruch 1, **dadurch gekennzeichnet, dass** die Bereitstellung von Druckluft für einen Spiegelreinigungsvorgang durch Freischaltung einer Speiseleitung (11) mittels eines elektrisch bzw. elektronisch gesteuerten Absperrventils (12) erfolgt, welche Speiseleitung (11) von einem Druckluftbehälter (13 abzweigt und entweder in eine die Reinigungsflüssigkeit zu einer oder mehreren spiegelseitigen Düsen (2) führende Speiseleitung (10) einmündet oder direkt zu einer oder mehreren spiegelseitigen druckluftausbringenden Düsen (2) führt.

## Claims

1. Procedure for cleaning an outside rear-view mirror (1) on motor vehicles, particularly commercial vehicles such as trucks and buses/coaches, in which mirror (1) after the driver has started a cleaning process cleaning fluid is first sprayed on to the mirror face (4) of said outside rear-view mirror via at least one nozzle (2), which mirror face (4) is then or later cleaned by means of compressed air supplied to it and blowing away said cleaning fluid and dirt particles, whereby the cleaning fluid for mirror cleaning is taken in a metered manner from a line (5) which is part of a vehicle-internal windscreen and/or headlight cleaning system and said compressed air for mirror cleaning is supplied in a metered manner from a compressed-air reservoir (13) which is part of a vehicle-internal compressed-air system, **characterised in that** either
a) a mirror-cleaning procedure is started by the driver's actuating a switch (18) arranged in the area of the driver's station either in the instrument panel or on the steering wheel or on a multi-function lever and the temporal sequence in which cleaning fluid and compressed air are discharged is controlled by an electronic control unit, whereby after the discharge of the cleaning fluid a certain reaction period is allowed for said fluid before compressed air is activated for blowing away said cleaning fluid and dirt particles or
b) cleaning agent and compressed air are sprayed on to the mirror face (4) independently of each other by the temporally offset actuation of two switches (22, 23) arranged in the area of the driver's station either in the instrument panel or on the steering wheel or on one or several multi-function lever(s) and that the duration of said spraying actions is specified by an activated time setter.

2. Procedure according to Claim 1, **characterised in that** cleaning fluid for mirror cleaning is supplied through an electrically or electronically controlled changeover of a multiway valve (9) installed in a supply line (5) which extends from a cleaning-fluid pump (7) arranged either on or in a cleaning-fluid reservoir (6) to the nozzles (8) on the headlights and/or windscreen, to the second output of which multiway valve (9) a supply line (10) connected to one or several nozzle(s) (2) on the outside rear-view mirror is connected.

3. Procedure according to Claim 1, **characterised in that** compressed air for a mirror-cleaning procedure is supplied by clearing the supply line (11) by means of an electrically or electronically controlled shut-off valve (12), which supply line (11) exits a compressed-air reservoir (13) and either discharges into a supply line (10) supplying the cleaning fluid to one or several nozzles (2) or leads directly to one or several mirror-mounted nozzles (2) for the discharge of compressed air.

## Revendications

1. Procédé de nettoyage d'un rétroviseur extérieur (1) de véhicule à moteur, en particulier d'un véhicule industriel comme les camions et bus, selon lequel, après l'initiation d'un processus de nettoyage par le chauffeur, du liquide de nettoyage est d'abord pulvérisé sur le miroir (4) par au moins une buse (2) située sur le rétroviseur extérieur (1), puis le miroir (4) est nettoyé par de l'air comprimé évacuant le liquide de nettoyage et les particules de poussière, le liquide de nettoyage du rétroviseur provenant d'une conduite (5) faisant partie d'un système de nettoyage du pare-brise et/ou des phares intégré au véhicule, et l'air comprimé servant au nettoyage du miroir étant fourni par un réservoir à air comprimé (13) faisant partie du système pneumatique interne du véhicule,
**caractérisé en ce que**
a) soit l'initiation d'un processus de nettoyage de rétroviseur est commandée par le chauffeur par l'actionnement d'un contacteur (18) situé dans le poste de conduite, soit sur le tableau de bord, soit sur le volant, soit sur un levier multifonctions et que l'ordre chronologique de pulvérisation du liquide de nettoyage et d'injection de l'air comprimé est géré par un dispositif de commande électronique, la pulvérisation du liquide de nettoyage étant suivie d'un certain temps de pause avant l'injection de l'air comprimé,
b) soit la pulvérisation du liquide de nettoyage et l'injection d'air comprimé sur le miroir (4) sont initiées indépendamment l'une de l'autre par l'actionnement successif de deux contacteurs (22, 23) situés dans le poste de conduite, soit sur le tableau de bord, soit sur le volant, soit sur un ou plusieurs leviers multifonctions et que leur durée est spécifiée par un relais de temporisation activé.

2. Procédé selon la revendication 1, **caractérisé en ce que** la dérivation du liquide de nettoyage du rétroviseur est réalisée par la commutation électrique ou électronique d'une vanne à plusieurs voies (9), intégrée à une conduite d'alimentation (5) partant d'une pompe de liquide de nettoyage (7) située soit sur, soit dans un réservoir de liquide de nettoyage (6) et menant à des buses de phares et/ou de pare-brise (8) et à la deuxième sortie de laquelle est raccordée une conduite d'alimentation (10) reliée à une ou plusieurs buses (2) de rétroviseur extérieur.

3. Procédé selon la revendication 1, **caractérisé en ce que** l'approvisionnement en air comprimé nécessaire au nettoyage du rétroviseur est assuré par l'activation d'une conduite d'alimentation (11) à l'aide d'une vanne d'arrêt (12) à commande électrique ou électronique, cette conduite d'alimentation (11) bifurquant d'un réservoir à air comprimé (13) et débouchant soit dans une conduite d'alimentation (10) amenant le liquide de nettoyage à une ou plusieurs buses de rétroviseur (2), soit directement à une ou plusieurs buses à air comprimé de rétroviseur (2).
